# EUROPEAN PATENT SPECIFICATION

(11) **EP 0 582 416 B1**
(45) Date of publication and mention of the grant of the patent: **15.04.1998**
(21) Application number: 93305884.4
(22) Date of filing: 26.07.1993
(51) Int. Cl.: H02K 23/04

(54) **Series wound electric motor with a rectified additional field excitation**
Elektrischer Reihenschlussmotor mit gleichgerichteter Zusatz-Felderregung
Moteur-série électrique avec excitation de champ additionnelle redressée

(30) Priority: 05.08.1992 GB 9216577
(43) Date of publication of application: 09.02.1994
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(56) References cited:
- DD-A- 109 775
- DD-A- 145 590

## Description

This invention relates to electric motors which have permanent magnetic poles to form a magnetic field in which an armature rotates.

Conventional motors of this type include armatures which are liable to overheat and burn out. When a motor is initially switched on, the sudden increase in voltage results in a huge surge of current particularly where the resistance of the armature is low, causing an overload in the armature. Heat builds up as a result, and may cause the armature to burn out.

In addition, a large surge of current through the armature produces a magnetic field which acts counter to the magnetic field of the permanent magnet. This counter magnetic field has a demagnetizing effect on the permanent magnet. This demagnetisation may not be significant initially, but after many current surges have occurred, the performance of the motor is diminished.

During the starting of an electric motor, sparking may occur between the commutator and the brushes.

The GDR patent documents DD-A-145 590 and DD-A-109 775 disclose an electric motor according to the preamble of claim 1, in which a full wave rectifier bridge is connected in series with the field windings.

The present invention is an electric motor comprising a permanent magnet including a plurality of poles, an armature disposed between the poles, rectified field windings connected in series with the armature and including field windings around the permanent magnet and a rectifier connected to the field windings, wherein the rectifier permits the passage of current through the field windings in one direction only, characterised in that the rectifier is a diode connected in parallel across the field windings.

The present invention will now be described by way of example only with reference to the accompanying drawing:

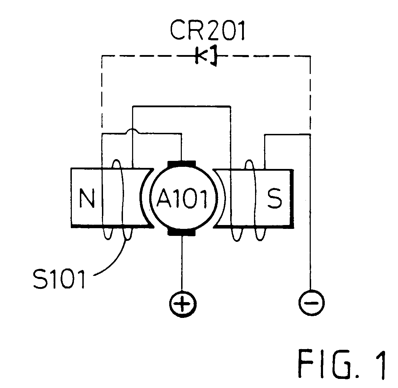

Figure 1 shows an embodiment of the invention where the armature is connected in series with the rectified antidemagnetising field windings.

The embodiment shown in Figure 1 is an electric motor of the type which employs a permanent magnet to form a magnetic field across an armature A101 of the motor. The present invention is particularly effective where the motor is a direct current motor, although an alternating current motor may be used.

The permanent magnet has field windings S101 wrapped around it so that the magnetic field produced by the magnet is reinforced by magnetism induced by current flowing in the field windings S101 and the permanent magnet does not become demagnetised. In conventional electric motors of this type, the magnetic field of the permanent magnet is known to reduce in strength, particularly when the motor is frequently overloaded. By including field windings S101 around the magnet, the magnetic field may be increased by inductance. The field windings S101 must be of the correct orientation, and the electric current must be passed through the field windings S101 in the correct directions in order that the magnetic field is reinforced. This constant reinforcement of the magnetic field reduces or prevents the demagnetisation of the permanent magnet.

The armature A101 is electrically connected in series with the field windings S101. As stated above, the permanent magnet is only reinforced when current flows through the field windings S101 in the correct direction. If the motor is to be used in forward and reverse, the direction of current through the motor flows in both directions. In this situation, the current in conventional field windings S101 would vary in direction depending upon the direction of the motor, thereby causing alternate reinforcement and diminution of the magnetic field.

In parallel with the field windings S101 according to the invention there is a bypass diode CR201 which acts as a very simple rectifying device. The diode CR201 permits current to flow in one direction only, blocking any current flow in the other direction. Where current flows though the diode, little or no current will pass through the field windings S101, since the field windings S101 present much greater resistance. Where the current flows in the opposite direction, the diode blocks the bypass section forcing current to flow through the field windings S101. This arrangement is a half wave rectifier which permits current travelling in one direction only to pass through the field windings S101 so that only induced magnetism which reinforces the permanent magnetic field occurs. If the motor is used in the forward direction, the current travels from the terminal marked ⊕ and passes through the armature A101 and through the field windings S101. The current does not pass through the diode since the diode blocks the passage of the current.

If the motor is used in reverse the current travels from the terminal marked ⊖. It passes through the diode CR201 since it offers no resistance and through the armature A101. Current does not pass through the field windings S101 since that would result in diminution of the magnetic field.

The invention is intended primarily for use where one direction of motion of the motor is required.

According to the invention, the huge current surges are reduced since the resistance of the circuit is increased by the inclusion of the field windings S101. The surge is reduced in just one of the current directions, usually corresponding to forward motion of the motor. The invention, however, reduces the overheating effect in armature A101 and thereby reduces the likelihood of the armature A101 burning out. The reduction in the severity of the surges also means that the permanent magnet will not be demagnetised so quickly. Furthermore, the field windings S101 reinforce the magnetic field of the permanent magnet.

The invention also helps to reduce the likelihood and severity of sparking between the commutator and brushes.

## Claims

1. An electric motor comprising:
a permanent magnet including a plurality of poles;
an armature (A101) disposed between the poles; and
rectified field windings connected in series with the armature (A101) and including field windings (S101) around the permanent magnet and a rectifier (CR201) connected to the field windings (S101) wherein the rectifier (CR201) permits the passage of current through the field windings (S101) in one direction only,
characterised in that the rectifier is a diode (CR201) connected in parallel across the field windings (S101).

## Patentansprüche

1. Elektromotor umfassend:
einen Permanentmagneten mit einer Vielzahl von Polen;
einen Anker (A101), der zwischen den Polen angeordnet ist; und
gleichgerichtete Feldwicklungen, die in Serie zu dem Anker (A101) geschaltet sind und Feldwicklungen (S101) enthalten, die um den Permanentmagneten angeordnet sind und einen Gleichrichter (CR201), der an die Feldwicklungen (S101) angeschlossen ist, wobei der Gleichrichter (CR201) den Stromfluß durch die Feldwicklungen (S101) in nur einer Richtung verhindert,
gekennzeichnet dadurch, daß der Gleichrichter eine Diode (CR201) ist, die parallel über die Feldwicklungen (S101) geschaltet ist.

## Revendications

1. Moteur électrique comprenant :
un aimant permanent à plusieurs pôles ;
un induit (A101) disposé entre les pôles ; et
des enroulements inducteurs redressés qui sont reliés en série avec l'induit (A 101) et qui comprennent des enroulements inducteurs (S 101) disposés autour de l'aimant permanent et un redresseur (CR 201) relié aux enroulements inducteurs (S 101), dans lequel le redresseur (CR 201) permet le passage du courant dans les enroulements inducteurs dans une direction seulement,
caractérisé en ce que le redresseur est constitué par une diode (CR 201) connectée en parallèle aux bornes des enroulements inducteurs (S 101).
